# EUROPÄISCHE PATENTSCHRIFT

(11) **EP 1 630 751 B1**
(45) Veröffentlichungstag und Bekanntmachung des Hinweises auf die Patenterteilung: **15.02.2012**
(21) Anmeldenummer: 05019772.2
(22) Anmeldetag: 05.12.1997
(51) Int. Cl.: G07D 7/00

(54) **Sicherheitselement**
Security element
Element de securité

(30) Priorität: 06.12.1996 DE 19650759
(43) Veröffentlichungstag der Anmeldung: 01.03.2006
(62) Teilanmeldung aus: 97952891.6
(73) Patentinhaber: Giesecke & Devrient GmbH, 81677 München (DE)
(72) Erfinder: Böhm, Michael, 81927 München (DE); Schmitz, Christian, 83727 Schliersee-Neuhaus (DE); Burchard, Theo, Dr., 83703 Gmund (DE)
(74) Vertreter: Klunker . Schmitt-Nilson . Hirsch

(56) Entgegenhaltungen:
- EP-A- 0 310 707
- EP-A- 0 610 917
- EP-A- 0 683 471
- WO-A-92/11142
- WO-A-97/23357
- US-A- 4 511 616

## Beschreibung

Die Erfindung betrifft ein Sicherheitselement für ein Sicherheitsdokument, wie eine Banknote, Ausweiskarte oder dergleichen, bestehend aus einem transluzenten Trägermaterial, das eine opake Schicht mit in Transmission erkennbaren Aussparungen in Form von Zeichen, Mustern oder dergleichen aufweist, sowie eine magnetische Schicht, die unter der opaken Schicht angeordnet ist.

Es ist seit langem bekannt, Sicherheitsdokumente mit Sicherheitsfäden aus Kunststoff zu versehen, welche eine magnetische Beschichtung aufweisen und damit als maschinenlesbares Sicherheitsmerkmal dienen (DE 16 96 245 A1, EP 0 310 707 A1).

Um die Fälschungssicherheit dieses bewährten Sicherheitsmerkmals weiter zu erhöhen, wurde auch bereits vorgeschlagen, die magnetische Beschichtung in diskontinuierlicher Form auf dem Trägermaterial vorzusehen. So beschreibt beispielsweise die EP 0 407 550 A1 ein Sicherheitsdokument mit einem eingelagerten Sicherheitsfaden, der mit einem Binärcode aus magnetischem Material versehen ist. Hierbei werden bestimmte Bitlängen definiert, welche über die gesamte Länge des Streifens konstant sind. Die Belegung einer Bitlänge mit magnetischem Material entspricht beispielsweise einer 1, während eine nicht mit magnetischem Material versehene Bitlänge einer 0 entspricht. Der aus der EP 0 407 550 A1 bekannte Binärcode zeichnet sich nun dadurch aus, daß er sich aus alternierend angeordneten Trennsegmenten und Wortsegmenten zusammensetzt, wobei der Wortabschnitt aus einer bestimmten Anzahl von Bitlängen besteht und die Folge der Binärwerte der Trennsegmente innerhalb dieser Wortlänge nicht vorkommen darf, um eine eindeutige Erkennung der Wortsegmente zu ermöglichen. Dieses Sicherheitselement besitzt allerdings den Nachteil, daß es keine Möglichkeit für eine schnelle visuelle Überprüfung bietet, wie sie in vielen Situationen des täglichen Lebens notwendig ist.

Es wurde daher ebenfalls vorgeschlagen, maschinell prüfbare Sicherheitsmerkmale mit visuellen Merkmalen zu kombinieren. Aus der EP 0 516 790 A1 ist bereits ein Sicherheitsdokument mit einem derartigen Sicherheitselement bekannt. Der hier beschriebene Sicherheitsfaden besteht aus einer transparenten Kunststoffträgerschicht mit einer metallischen Beschichtung, in welcher Aussparungen in Form von Zeichen oder Mustern, der sogenannten "Negativschrift", vorgesehen sind. Diese Aussparungen und die metallische Umgebung sind, sofern der Faden in der Papiermasse vorliegt, bei Betrachtung im Auflicht kaum sichtbar. Bei Betrachtung im Durchlicht allerdings heben sich die lichtdurchlässigen Aussparungen stark kontrastierend von ihrer opaken Umgebung ab und sind damit gut erkennbar. Zugleich weist das Sicherheitselement eine magnetische Beschichtung auf, die z.B. unterhalb der Metallschicht in den Randbereichen des Fadens und symmetrisch zu den Aussparungen entlang der Laufrichtung des Elements im Dokument vorgesehen ist.

Aus der EP 0 683 471 A1 ist eine Karte mit einem optisch lesbaren holographischem Balkencode und einem maschinenlesbaren Magnetstreifen bekannt. In einer bevorzugten Ausgestaltung liegen die holographischen und magnetischen Daten kombiniert in einem einzigen Streifen vor.

Die US 4,511,616 A beschreibt ein Sicherheitslaminat mit einer magnetischen Schicht, über der eine metallische Schicht angeordnet ist. In der metallischen Schicht können Aussparungen vorgesehen sein, durch die ein durch eine Zwischenschicht bereitgestelltes Muster sichtbar wird.

Der Erfindung liegt ausgehend von diesem Stand der Technik die Aufgabe zugrunde, ein Sicherheitselement vorzuschlagen, das einen erhöhten Fälschungsschutz bietet und gleichzeitig einfach herstellbar ist.

Die Lösung dieser Aufgabe ergibt sich aus den unabhängigen Ansprüchen Weiterbildungen sind Gegenstand der Unteransprüche.

Die Erfindung geht von der Idee aus, die Vorteile der visuell prüfbaren Negativschrift und der maschinell lesbaren magnetischen Codierung in besonderer Weise mit einer optisch variablen Schicht zu kombinieren und über die besondere gegenseitige Zuordnung auf dem Sicherheitselement einen gegenüber den einzelnen Sicherheitsmerkmalen erhöhten Fälschungsschutz zu gewährleisten.

Das erfindungsgemäße Sicherheitselement besteht daher aus einer optisch variablen Schicht mit Aussparungen sowie einer magnetischen Codierung, wobei die Aussparungen in den magnetschichtfreien Bereichen des Elements angeordnet sind. Die besondere geometrische Anordnung der Aussparungen und der magnetischen Bereiche besteht in einer Ineinanderschachtelung von Codierung und Aussparungen, d. h. die magnetschichtfreien Anteile der Codierung werden genutzt, um in diesem Bereich die visuell prüfbaren Negativschriftzeichen anzuordnen, nämlich konkret in den magnetschichtfreien Zwischenbereichen der Magnetcodierung. Zusätzlich ist es allerdings auch möglich, ein weiteres maschinenlesbares Merkmal, wie z. B. eine weitere magnetische Schicht auf dem Sicherheitselement vorzusehen, das selbstverständlich die Überprüfbarkeit der anderen Merkmale nicht beeinträchtigen darf.

Gemäß einer ersten Ausführungsform ist die optisch variable Schicht eine Lackschicht mit einer eine Beugungsstruktur darstellenden Reliefstruktur in Kombination mit einer Reflexionsschicht, in der die Aussparungen liegen. Gemäß einer zweiten Ausführungsform ist die optisch variable Schicht ein Interferenzschichtaufbau.

Gemäß einer bevorzugten Ausführungsform weist das Sicherheitselement die Form eines Fadens oder Streifens auf, das zumindest teilweise in ein Dokumentenmaterial, wie z. B. Banknotenpapier, eingebettet wird, oder auch auf der Oberfläche angeordnet sein kann.

Wenn das Sicherheitselement auf der Oberfläche des Dokumentenmaterials angeordnet wird, ist es nicht unbedingt notwendig, alle für die Echtheitserkennung notwendigen Schichten auf einem separaten Träger vorzubereiten. Da das Sicherheitselement eine optisch wirksame Schicht, nämlich eine Beugungsstruktur oder Interferenzschichtelemente aufweist, ist es notwendig, die Oberfläche des Dokumentenmaterials im Bereich des Sicherheitselements zu glätten, da Oberflächenrauhigkeiten den optischen Effekt und die Brillanz des Elements beeinträchtigen. Dies geschieht häufig durch Aufbringen einer Untergrundschicht, beispielsweise einer Lackschicht In diese Schicht kann nun zusätzlich das magnetische Material eingebracht werden.

Gemäß einer weiteren Ausführungsform der Erfindung kann diese Untergrundschicht in zwei Durchgängen aufgebracht werden. Der ersten aufzubringenden Schicht wird ein Magnetmaterial zugesetzt und diese Schicht anschließend diskontinuierlich, z.B. in Form eines Barcodes aufgebracht. Die zweite Schicht wird vollflächig über der ersten Schicht angeordnet und ist so zusammengesetzt, daß eine optimale Haftung zwischen Dokumentenmaterial und weiteren aufzubringenden Kennzeichnungsschichten, wie z.B. einem Hologramm erzeugt wird. Auch hier ist das Sicherheitselement vorzugsweise in Form eines Streifens ausgeführt.

Die folgenden Beispiele werden daher auch anhand dieser bevorzugten Form beschrieben. Es ist allerdings im Rahmen der Erfindung ebenso möglich, dem Sicherheitselement jede beliebige andere Umrißform zu geben.

Die besonderen Ausführungsformen der Erfindung sowie ihre Vorteile werden anhand der Figuren näher erläutert.

Es zeigen:
- Fig. 1: ein Sicherheitsdokument mit einem Sicherheitselement,
- Fig. 2: ein Sicherheitselement in Aufsicht, welches nicht erfindungsgemäß ist,
- Fig. 3 bis 5: Varianten des Schichtaufbaus des Sicherheitselements aus Fig. 2 bei einem Schnitt entlang A - A, die ebenfalls nicht erfindungsgemäß sind,
- Fig. 6 bis 11: schematische Darstellungen der relativen Anordnung der Nega- tivschrift und der Codierung zueinander in Aufsicht, wobei Fig. 6 und 11 erfindungsgemäße Sicherheitselemente darstellen,
- Fig. 12: ein Sicherheitsdokument mit einer Variante eines erfindungsge- mäßen Sicherheitselements, und
- Fig. 13: einen Schnitt entlang A - A durch das Sicherheitsdokument gemäß Fig. 12.

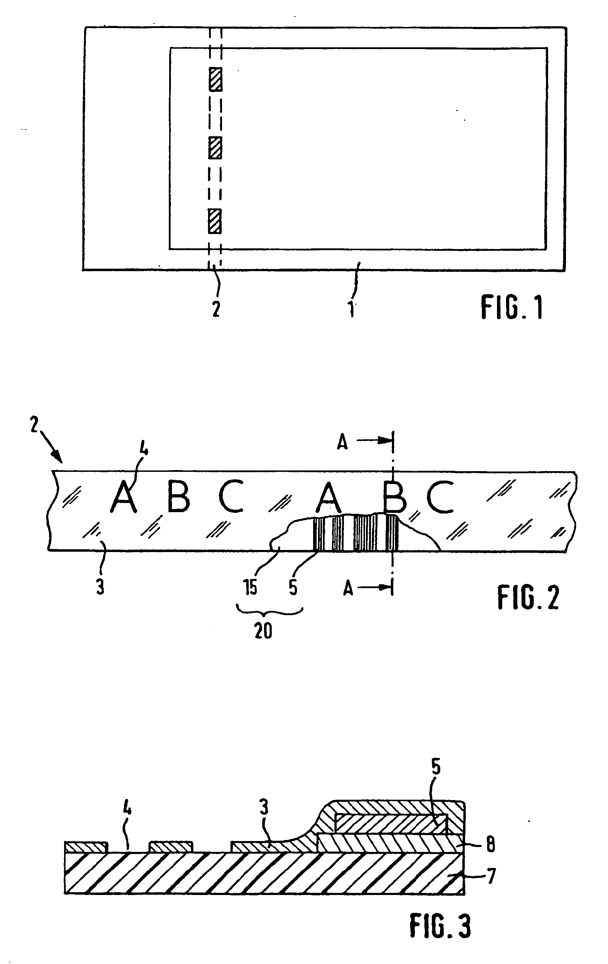

Fig. 1 zeigt ein Sicherheitsdokument 1, wie eine Banknote, in welches ein Sicherheitselement 2 in Form eines sogenannten Fenster-Sicherheitsfadens eingebettet ist. Hierbei wird der Sicherheitsfaden 2 während der Papierherstellung in die Papiermasse quasi eingewebt, so daß er in regelmäßigen Abständen direkt an die Dokumentenoberfläche tritt, was durch die schraffierten Kästchen angedeutet wird. Alternativ ist es jedoch auch möglich, den Faden vollständig in das Papier einzubetten oder ihn so mit dem Dokumentenmaterial zu verbinden, daß er vollflächig an der Oberfläche zu sehen ist.

Fig. 2 zeigt prinzipiell das äußere Erscheinungsbild des Sicherheitselements 2. Der Betrachter des Sicherheitselements 2 sieht lediglich die opake Schicht 3, die in bestimmten Bereichen Aussparungen 4, die Negativschrift, aufweist. Die magnetische Codierung 20 wird von der opaken Schicht 3 verdeckt und ist daher nicht ohne zusätzliche Hilfsmittel zu lokalisieren. Sie muß allerdings in einem Bereich des Elements 2 angeordnet sein, in welchem sich keine Negativschrift 4 befindet, um den optischen Effekt der Negativschrift 4 nicht zu beeinträchtigen.

Der Aufriß im Bereich 6 zeigt, daß die magnetische Codierung 20 in diesem Fall parallel zu den Aussparungen 4 angeordnet ist. Sowohl die Codierung 20 als auch die Aussparungen nehmen in etwa die halbe Fadenbreite ein.

Die Codierung 20 setzt sich aus magnetischen Bereichen 5 und unmagnetischen Bereichen 15 zusammen und kann mehrmals auf dem Sicherheitselement 2 angeordnet sein. Vorzugsweise wiederholt sich die Codierung 20 fortlaufend entlang des Elements 2.

Ein Schnitt entlang A - A durch diesen Faden ist in Fig. 3 dargestellt. Die magnetische Codierung 20 und die opake Schicht 3 mit den Aussparungen 4 sind auf einem zumindest transluzenten Kunststoffmaterial 7 angeordnet. Im Falle eines Fadens, der in das Dokumentenmaterial eingebettet ist, handelt es sich üblicherweise um eine Kunststoffolie, die vorzugsweise eine Dicke von ca. 10 bis 20 µm aufweist. Im Falle eines Sicherheitselements, das auf die Dokumentenoberfläche aufgebracht wird, kann es allerdings auch sinnvoll sein, das Kunststoffmaterial als dünne Lackschicht auszubilden. Hier bietet es sich an, den Schichtaufbau auf einer separaten Folie vorzubereiten und anschließend auf das Dokument zu übertragen. Dies kann insbesondere von Vorteil sein, wenn das Sicherheitselement zusätzlich eine Beugungsstruktur in Form einer Reliefstruktur aufweist, die in das Kunststoffmaterial eingeprägt wurde. Das Kunststoffmaterial kann auch andere sicherheitstechnisch relevante Merkmale aufweisen, wie z.B. eine Einfärbung mit lasierenden Farben und/oder Lumineszenzstoffen.

Im Randbereich des Kunststoffmaterials 7 ist die magnetische Codierung 20 angeordnet. Hier durch einen magnetischen Bereich 5 dargestellt. Um das magnetische Material 5 von beiden Seiten des Fadens 2 unsichtbar zu machen, kann unter der Codierung 20 eine weitere opake Schicht 8 angeordnet sein. Diese Schicht 8 kann entweder in Form eines Streifens über die gesamte Länge des Sicherheitselements 2 oder nur in den mit Magnetmaterial beschichteten Bereichen 5 der Codierung 20 vorgesehen sein. Vorzugsweise besteht die opake Schicht 8 aus dem gleichen Material wie die opake Schicht 3 oder weist zumindest den gleichen Farbton wie die opake Schicht 3 auf. Sie kann jedoch auch aus einem Material bestehen, das zur opaken Schicht 3 farblich kontrastiert.

Über der Codierung 20 ist die opake Schicht 3 angeordnet, die nicht nur die Codierung 20 sondern auch die übrigen Bereiche der Kunststoffschicht 7 abdeckt und lediglich stellenweise in Form der Negativzeichen 4 unterbrochen ist.

Dieser Faden 2 kann auf sehr einfache und rationelle Weise hergestellt werden. In einem ersten Schritt wird das Kunststoffmaterial 7 mit der unteren opaken Schicht 8 bedruckt. Anschließend wird die Magnetschicht 5 und gleichzeitig im Bereich der späteren Zeichen 4 eine lösliche Farbschicht in einem Druckvorgang oder in zwei aufeinanderfolgenden Druckvorgängen aufgebracht. In einem weiteren Schritt wird die opake Schicht 3, vorzugsweise Aluminium, über das gesamte Fadenmaterial aufgedampft. In einem letzten Schritt wird die lösliche Druckfarbe im Bereich der Zeichen 4 mit einem geeigneten Lösungsmittel gelöst und damit in diesen Bereichen das Metall entfernt, so daß die Negativzeichen 4 entstehen.

Alternativ ist es auch möglich, die opake Schicht 3 als Druckschicht auszuführen, bei welcher während des Druckvorgangs die Zeichen 4 ausgespart werden. Hierfür wird vorzugsweise eine metallpigmenthaltige Druckfarbe verwendet.

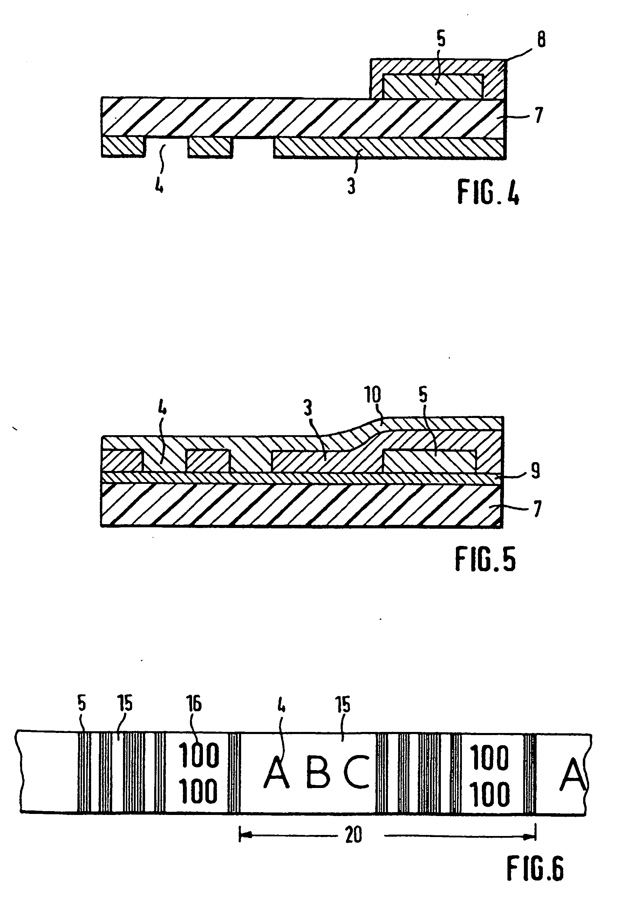

Fig. 4 zeigt einen alternativen Schichtaufbau, wie er sich bei einem Schnitt entlang A - A in Fig. 2 ergibt. Hier werden die Codierung 20 bzw. das Magnetmaterial 5 und die opake Schicht 3 mit den Negativzeichen 4 auf unterschiedlichen Oberflächen des Kunststoffmaterials 7 angeordnet. Auch hier wird die Magnetcodierung beidseitig von opaken Schichten 3 bzw. 8 abgedeckt. Auf die opake Schicht 8 kann verzichtet werden, wenn für die magnetischen Bereiche der Codierung 20 bzw. die magnetischen Bereiche 5 der Codierung 20 magnetisches Eisenmaterial verwendet wird, welches im Gegensitz zu den üblicherweise verwendeten dunklen Magnetmaterialien eine helle Eigenfarbe aufweist

Fig. 5 zeigt eine weitere Variante des Schichtaufbaus eines Sicherheitselements gemäß Fig. 2. Hier wird das Kunststoffmaterial 7 in einem ersten Schritt mit einer semitransparenten Metallschicht 9 versehen, welche entweder durch gerastertes Aufbringen einer opaken Metallschicht oder aber durch Aufdampfen einer sehr dünnen, durchgehenden Metallschicht erzeugt wird. Auf diese Schicht wird die Magnetcodierung 20 aufgebracht, welche anschließend mit einer opaken, vorzugsweise schwarzen Druckfarbe 3 abgedeckt und gleichzeitig die Negativzeichen 4 erzeugt werden. Um diesem Faden ein helleres Erscheinungsbild zu geben, wird in einem letzten Schritt nochmals eine semitransparente Metallschicht 10 über dem gesamten Elementschichtaufbau vorgesehen. Aufgrund der Semitransparenz der Schichten 9 und 10 bleiben die Aussparungen 4 im Durchlicht nach wie vor erkennbar.

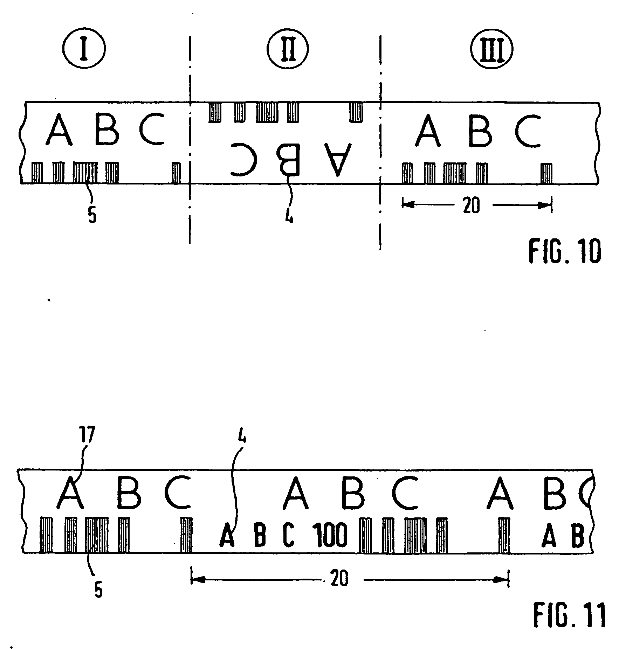

Vor dem Hintergrund dieser prinzipiellen Möglichkeiten des Fadenaufbaus ist es nun auch möglich, die Aussparungen 4 und die Magnetcodierung 20 in anderen geometrischen Konstellationen anzuordnen oder sie mit einem weiteren visuell und/ oder maschinell lesbaren Merkmal zu kombinieren, um den Fälschungsschutz weiter zu erhöhen. Derartige Varianten zeigen schematisch die Fig. 6 bis 11 in Aufsicht, wobei die Fig. 6 und 11 erfindungsgemäße Ausführungsbeispiele darstellen. Zur besseren Anschaulichkeit werden hier lediglich die Codierung 20 sowie die Aussparungen 4 in ihrer relativen Lage zueinander auf dem Faden gezeigt. Die opake Schicht 3 sowie weitere möglicherweise vorhandene Schichten werden nicht gezeigt.

### Beispiel 1 (Fig. 6 und 11)

Gemäß Fig. 6 erstreckt sich die Codierung 20 über die gesamte Breite des Fadens. Sie setzt sich aus Bereichen 5, die mit magnetischem Material versehen sind, und magnetschichtfreien Bereichen 15 zusammen. In einer speziellen Ausführungsform besteht der Code 20 aus gleichgroßen Bitzellen, die entweder mit magnetischem Material gefüllt (z.B. binäre "1") werden oder nicht (z.B. binäre "0"). Gemäß der Erfindung werden die magnetschichtfreien Bereiche 15 der Codierung 20 genutzt, um hier die in Transmission erkennbaren Aussparungen 4 anzuordnen. Auf diese Weise können Negativschrift 4 und Magnetcodierung 20 gemeinsam auf einem Faden vorgesehen werden, ohne sich gegenseitig zu beeinträchtigen. Die Aussparungen 4 können daher wie bei Fäden, die lediglich eine Negativschrift aufweisen, in der Fadenmitte angeordnet und in der üblichen Größe erzeugt werden. Dies hat zum einen den Vorteil, daß die Aussparungen 4 so groß gewählt werden können, daß sie vom Auge gut erkennbar sind, was insbesondere bei Sicherheitsfäden mit einer Breite von 2 bis 3 mm, die in das Dokumentenmaterial eingebettet werden, von Vorteil ist Zudem weist der Faden das gleiche äußere Erscheinungsbild auf wie ein üblicher Negativschrift-Sicherheitsfaden. Nichts läßt von außen erkennen, daß gleichzeitig eine Magnetcodierung auf dem Faden angeordnet ist.

Die erfindungsgemäße Idee, die Aussparungen 4 in den magnetschichtfreien Zwischenbereichen 15 der Codierung 20 anzuordnen, läßt sich auch besonders vorteilhaft bei einer Codierung einsetzen, die sich aus Wort- und Trennsegmenten zusammensetzt, wie sie beispielsweise aus der EP 0 407 550 A1 bekannt ist. Denn wählt man für die Bitfolge der Trennsegmente lediglich binäre "0", d.h. magnetschichtfreie Bitzellen, so entsteht ein relativ großer, magnetschichtfreier Zwischenraum, in welchem problemlos die Aussparungen angeordnet werden können.

Zusätzlich können selbstverständlich auch in den magnetschichtfreien Bereichen der Wortsegmente Aussparungen 16 vorgesehen werden. Ein erhöhter Fälschungsschutz wird dabei erzielt, wenn die Aussparungen 16 als Mikroschriftzeichen ausgeführt werden, d.h. eine wesentlich geringere Größe aufweisen als die Aussparungen 4. Denn die Mikroschriftzeichen lassen sich nicht oder nur mit hohem Aufwand imitieren.

Eine weitere Ausgestaltungsvariante zeigt Fig. 11. Hier wird der Code 20 und die Negativschrift 4 bzw. die Magnetschicht 5 mit den dazwischenliegenden Aussparungen 4 nicht über die gesamte Breite des Fadens angeordnet. Im verbleibenden Teil des Sicherheitselements werden ebenfalls Aussparungen 16 vorgesehen, die sich, wie bereits beschrieben, in der Größe von den Aussparungen 4 unterscheiden.

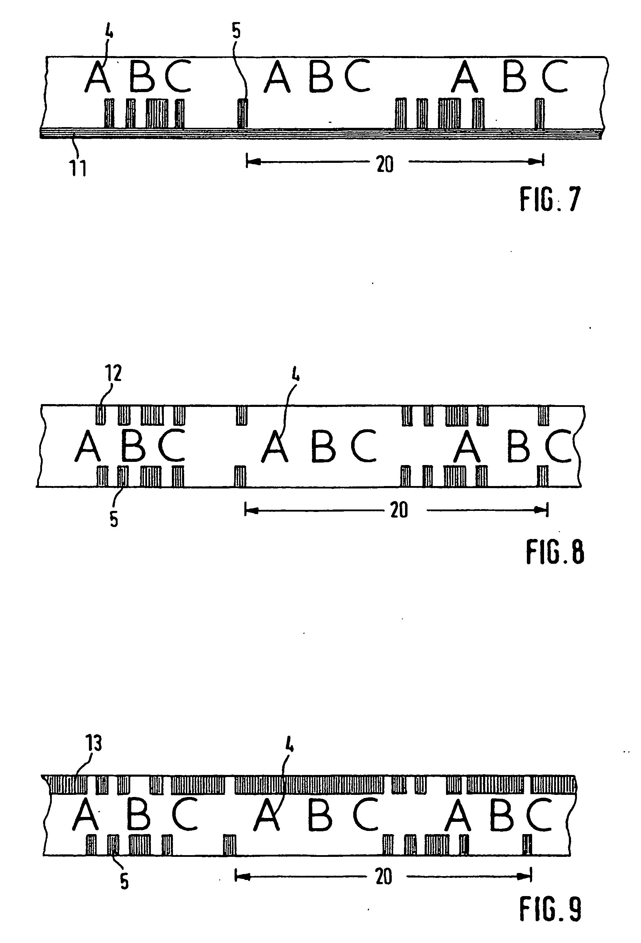

### Beispiel 2 (Fig. 7 bis 9)

Die grundlegende Idee dieser Ausführungsform liegt darin, neben der Magnetcodierung und der Negativschrift eine weitere Magnetschicht vorzusehen, wodurch ein zusätzlicher Fälschungsschutz erzielt wird. Gemäß Fig. 7 werden die magnetischen Bereiche 5 der Codierung 20 über eine weitere Magnetschicht 11 miteinander verbunden. Diese Magnetschicht 11 darf selbstverständlich die Lesbarkeit der Codierung 20 nicht beeinträchtigen. Da die Sensoren, mit welchen die Magnetcodierung gelesen wird, meist ein starkes Signal benötigen, muß das Magnetmaterial 5 der Codierung 20 eine bestimmte Mindestdicke aufweisen. Für eine reine magnetische "Durchgangsprüfung" entlang des Fadens 2 wäre jedoch eine wesentlich geringere Schichtdicke ausreichend. Das bedeutet, die Magnetschicht 11 muß eine im Vergleich zur Magnetschicht 5 geringere Dicke aufweisen, so daß ein Sensor, der die Codierung 20 erfassen soll, kein Signal von der Magnetschicht 11 erhält.

Dieses magnetische Muster läßt sich auch auf einfache Weise herstellen, indem die Folie 7 zuerst mit einem magnetischen Streifen in der Dicke der Magnetschicht 11 bedruckt und anschließend in einem zweiten Druckvorgang in den Bereichen 5 eine Magnetschicht aufgebracht wird, deren Schichtstärke gerade der Differenz zwischen der Schichtstärke der Magnetschicht 11 und der für die Codierung 20 benötigten Schichtstärke entspricht.

Auf diese Weise kann entweder allein das Vorhandensein von magnetischem Material über die gesamte Fadenlänge oder die magnetische Codierung oder auch beides überprüft werden.

Denkbar wäre auch, für die Magnetschicht 11 ein anderes magnetisches Material zu wählen und neben der Codierung 20 das Vorhandensein der spezifischen physikalischen Eigenschaften dieser zweiten Magnetschicht 11 zu prüfen.

Fig. 8 zeigt eine weitere Ausführungsform. Hier wird die zweite Magnetschicht 12 ebenfalls in Form einer Codierung aufgebracht, die identisch zur Codierung 20 ist. Im vorliegenden Beispiel wird diese zweite Codierung parallel zur ersten Codierung aufgebracht und zwischen diesen die Aussparungen 4 angeordnet Die Codierungen können hierbei symmetrisch oder asymmetrisch zu den Aussparungen 4 angeordnet sein. Die Codierungen können jedoch auch in einer anderen Anordnung auf dem Element vorgesehen werden, zu beachten ist lediglich, daß die Negativschrift 4 nicht verdeckt wird.

Aufgrund der doppelten Codierung ist es möglich, eine Koinzidenzprüfung durchzuführen, bei welcher die Codierungen unabhängig voneinander gelesen und anschließend auf Übereinstimmung geprüft werden.

Gemäß Fig. 9 ist die zweite Magnetschicht 13 ebenfalls in Form einer Codierung aufgebracht. Allerdings handelt es sich hierbei um eine Negativdarstellung der ersten Codierung 20. Die beiden Codierungen werden parallel und exakt auf Lücke zueinander aufgebracht, so daß sich bei einer Prüfung entlang des Fadens ein konfinuierliches Magnetsignal ergibt.

Selbstverständlich ist es auch im Falle der hier beschriebenen Ausführungsvarianten möglich, in erfindungsgemäßer Weise zwischen den magnetischen Bereichen 5, 12, 13 Aussparungen in Form von Zeichen beliebiger Größe vorzusehen. Ebenso ist es selbstverständlich möglich, die hier im Beispiel 2 beschriebenen Varianten bei den übrigen Ausführungsbeispielen, beispielsweise gemäß Fig. 6 oder 10 einzusetzen.

### Beispiel3 (Fig. 10)

Gemäß Fig. 10 kann das Sicherheitselement in Teilbereiche, hier I, II, III, untergliedert werden. In den einzelnen Teilbereichen befindet sich zumindest einmal die vollständige Codierung 20 und ein Negativschriftzug 4. Beide sind parallel zueinander angeordnet. In Teilbereich II ändert sich jedoch die Anordnung der Negativschrift 4 und der Codierung 20 relativ zur Anordnung in Teilbereich I. Im vorliegenden Fall handelt es sich um eine Drehung um 180°, Es wäre jedoch auch möglich, die Teilbereiche in anderen Orientierungen zueinander anzuordnen. Bei breiteren Sicherheitselementen könnten beispielsweise die Teilbereiche in ihrern inneren Aufbau identisch sein und lediglich die Orientierung der Teilbereiche zueinander variieren, indem sie beispielsweise in unterschiedlichen Winkeln zueinander angeordnet werden.

Je häufiger die Wechsel und je komplizierter die Anordnungen desto schwieriger wird es für potenzielle Fälscher, den Faden zu imitieren.

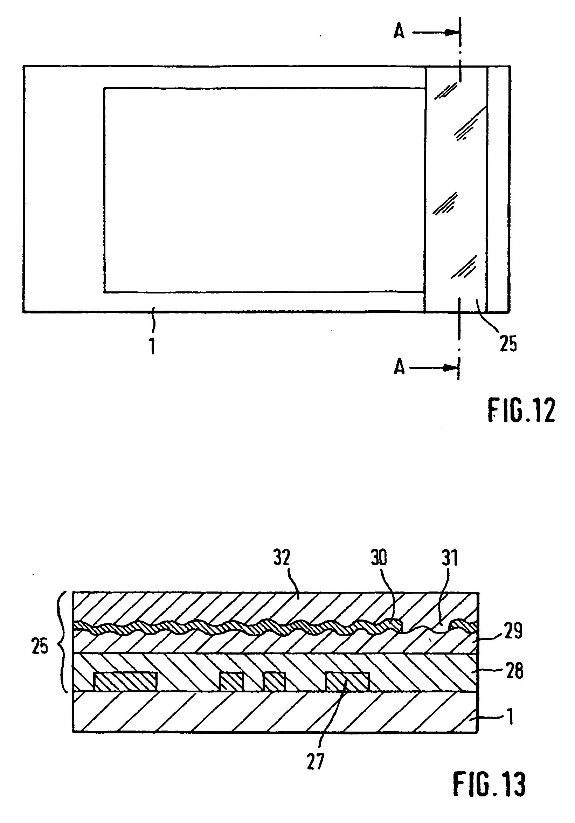

Die Fig. 12 und 13 zeigen eine weitere Ausführungsform des erfindungsgemäßen Sicherheitsdokuments bzw, Sicherheitselements. In Fig. 12 ist ein Sicherheitsdokument 1 in Aufsicht dargestellt, auf dessen Oberfläche ein Sicherheitselement 25 angeordnet ist. Dieses Sicherheitselement 25 weist eine optisch variable Struktur auf, die bei Änderung des Betrachtungswinkels eine Änderung des farblichen Eindrucks der dargestellten Information hervorruft und/oder eine andere Information erkennen läßt. Im gezeigten Beispiel handelt es sich um eine geprägte Beugungsstruktur, die mit einer Metallschicht kombiniert ist, so daß die in der Beugungsstruktur gespeicherte Information in Reflexion für den Betrachter erkennbar wird.

Fig. 13 zeigt einen Schnitt entlang A - A, der den Schichtaufbau des Sicherheitselements 25 deutlich macht. Das Wertdokument 1 ist mit einer Lackschicht 27 versehen, welche in Form einer Codierung, beispielsweise eines Barcodes aufgebracht ist Diese Lackschicht enthält magnetische Pigmente, die maschinell nachgewiesen werden können. Über dieser magnetischen Codierung ist eine vollflächige weitere Lackschicht 28 angeordnet, die keinerlei magnetische Pigmente enthält und in erster Linie dazu dient, die Oberflächenrauhigkeiten des Dokuments 1 auszugleichen und eine gute Haftung zu den folgenden Schichten zu gewährleisten. Auf dieser Lackschicht 28 befindet sich eine Klebstoffschicht 29, welche z.B. aus einem Lack oder einem Heißschmelzkleber bestehen kann. An diese Klebstoffschicht 29 schließt sich eine Metallschicht 30 an, deren Oberfläche eine Reliefstruktur aufweist, die die Beugungsstruktur darstellt. Diese Metallschicht 30 enthält Aussparungen 31 in Form von Zeichen, Mustern oder dergleichen, die eine zusätzliche visuell sichtbare Information darstellen. Über der Metallschicht ist schließlich eine weitere Lackschicht 32 angeordnet. Diese kann aus einem beliebigen Material bestehen, wie z.B. UV-härtbaren Polymeren oder durch UV-Strahlung initiierbaren Polymeren oder thermoplastischen Materialien.

Die Lackschicht 32, die Metallschicht 30 sowie die Klebstoffschicht 29 werden vorteilhafterweise auf einer separaten Trägerschicht vorbereitet und anschließend nach dem Aufbringen der Lackschichten 27 und 28 mit dem Wertdokumentenmaterial 1 verbunden. Das Trägermaterial wird anschließend von der Lackschicht 32 abgezogen.

Da die magnetische Schicht 27 üblicherweise mit einem beliebigen Druckverfahren aufgedruckt wird, ist es sehr einfach möglich, die Magnetcodierung in den Bereichen des Sicherheitselements 25 aufzubringen, in denen sich keine Aussparungen 31 befinden. In die zweite Lackschicht 28 können weitere Zusätze integriert werden, wie beispielsweise Farbpigmente, lumineszierende Pigmente oder Effekt- bzw. Glanzpigmente.

Die erfindungsgemäßen Sicherheitselemente können nicht nur auf oder in Banknoten vorteilhaft eingesetzt werden, sondern auch auf beliebigen anderen Dokumenten, wie z.B. Schecks, Ausweiskarten oder dergleichen.

Statt einer Beugungsstruktur, bestehend aus einer Lackschicht, einer Metallschicht und einer Klebstoffschicht, ist es auch möglich, andere optisch variable Schichten zu verwenden, wie z.B. Interferenzschichtaufbauten, Druckfarben mit Interferenzschichtpigmenten oder Flüssigkristallpigmenten etc.

Bei der Verwendung von transluzenten, optisch variablen Schichten, wie beispielsweise bestimmten Interferenzschichtpigmenten, kann es sinnvoll sein, die Lackschicht 28 schwarz einzufärben, da dadurch die Brillanz der optisch variablen Schicht unterstützt werden kann. Der magnetische Code, der durch die Schicht 27 dargestellt wird, ist hierbei nach wie vor durch diese Schichten hindurch maschinell lesbar.

## Patentansprüche

1. Sicherheitselement (25) für ein Sicherheitsdokument (1), wie eine Banknote, Ausweiskarte oder dergleichen, bestehend aus einer magnetischen Schicht (27) und mindestens einer optisch variablen Schicht (32), wobei die magnetische Schicht (27) von der optisch variablen Schicht (32) abgedeckt wird, **dadurch gekennzeichnet, dass** die magnetische Schicht (27) in Form von voneinander beabstandeten magnetischen Bereichen vorliegt, die eine Codierung bilden, wobei die optisch variable Schicht (32) eine Lackschicht mit einer Reliefstruktur ist, die eine Beugungsstruktur darstellt und die mit einer Reflexionsschicht (30) kombiniert ist, und die Reflexionsschicht (30) Aussparungen (31) in Form von Zeichen, Mustern oder dergleichen in den magnetschichtfreien Zwischenbereichen und nicht in den Bereichen der Magnetcodierung aufweist.

2. Sicherheitselement (25) für ein Sicherheitsdokument (1), wie eine Banknote, Ausweiskarte oder dergleichen, bestehend aus einer magnetischen Schicht (27) und mindestens einer optisch variablen Schicht (32), wobei die magnetische Schicht (27) von der optisch variablen Schicht (32) abgedeckt wird, **dadurch gekennzeichnet, dass** die magnetische Schicht (27) in Form von voneinander beabstandeten magnetischen Bereichen vorliegt, die eine Codierung bilden, wobei die optisch variable Schicht (32) ein Interferenzschichtaufbau ist und Aussparungen (31) in Form von Zeichen, Mustern oder dergleichen in den magnetschichtfreien Zwischenbereichen und nicht in den Bereichen der Magnetcodierung aufweist.

3. Sicherheitselement (25) nach wenigstens einem der Ansprüche 1 bis 2, **dadurch gekennzeichnet, dass** zwischen der magnetischen Schicht (27) und der optisch variablen Schicht (32) eine weitere vollflächige Lackschicht (28) angeordnet ist.

4. Sicherheitselement (25) nach Anspruch 3, **dadurch gekennzeichnet, dass** die weitere Lackschicht (28) eingefärbt ist.

5. Sicherheitselement (25) nach Anspruch 4, **dadurch gekennzeichnet, dass** die weitere Lackschicht schwarz eingefärbt ist.

6. Sicherheitselement (25) nach einem der Ansprüche 3 bis 5, **dadurch gekennzeichnet, dass** die weitere Lackschicht weitere Echtheitskennzeichen enthält.

7. Sicherheitselement (25) nach Anspruch 6, **dadurch gekennzeichnet, dass** die weitere Lackschicht als weiteres Echtheitskennzeichen Fluoreszenzpigmente enthält.

8. Sicherheitselement nach einem der Ansprüche 1 bis 7, **dadurch gekennzeichnet, dass** die magnetische Schicht (27) durch eine Lackschicht gebildet wird, die magnetische Pigmente enthält.

9. Sicherheitsdokument (1), wie eine Banknote, Ausweiskarte oder dergleichen, **dadurch gekennzeichnet, dass** es mit einem Sicherheitselement (2) nach wenigstens einem der Ansprüche 1 bis 8 versehen ist.

10. Sicherheitsdokument (1) nach Anspruch 9, **dadurch gekennzeichnet, dass** das Sicherheitselement (2) in das Dokumentenmaterial zumindest teilweise eingebettet ist.

11. Sicherheitsdokument (1) nach Anspruch 9, **dadurch gekennzeichnet, dass** das Sicherheitselement (2) auf der Oberfläche des Sicherheitsdokuments (1) angeordnet ist.

12. Sicherheitsdokument (1) nach Anspruch 11, **dadurch gekennzeichnet, dass** die magnetische Schicht (27) des Sicherheitselements (25) zwischen der optisch variablen Schicht (32) des Sicherheitselements (25) und dem Sicherheitsdokument (1) angeordnet ist.

## Claims

1. A security element (25) for a security document (1), such as a bank note, ID card or the like, consisting of a magnetic layer (27) and at least one optically variable layer (32), whereby the magnetic layer (27) is covered by the optically variable layer (32), **characterized in that** the magnetic layer (27) is present in the form of spaced-apart magnetic areas which form a coding, whereby the optically variable layer (32) is a lacquer layer with a relief structure representing a diffraction structure and combined with a reflective layer (30), and the reflective layer (30) has gaps (31) in the form of characters, patterns or the like in the magnetic layer-free intermediate areas and not in the areas of the magnetic coding.

2. A security element (25) for a security document (1), such as a bank note, ID card or the like, consisting of a magnetic layer (27) and at least one opticallly variable layer (32), whereby the magnetic layer (27) is covered by the optically variable layer (32), **characterized in that** the magnetic layer (27) is present in the form of spaced-apart magnetic areas which form a coding, whereby the optically variable layer (32) is an interference layer structure and has gaps (31) in the form of characters, patterns or the like in the magnetic layer-free intermediate areas and not in the areas of the magnetic coding.

3. The security element (25) according to at least one of claims 1 to 2, **characterized in that** between the magnetic layer (27) and the optically variable layer (32) there is arranged a further lacquer layer (28) over the full surface.

4. The security element (25) according to claim 3, **characterized in that** the further lacquer layer (28) is colored.

5. The security element (25) according to claim 4, **characterized in that** the further lacquer layer is colored black.

6. The security element (25) according to any of claims 3 to 5, **characterized in that** the further lacquer layer contains further authenticity identifiers.

7. The security element (25) according to claim 6, **characterized in that** the further lacquer layer contains fluorescent pigments as a further authenticity identifier.

8. The security element according to any of claims 1 to 7, **characterized in that** the magnetic layer (27) is formed by a lacquer layer containing magnetic pigments.

9. A security document (1), such as a bank note, ID card or the like, **characterized in that** it is provided with a security element (2) according to at least one of claims 1 to 8.

10. The security document (1) according to claim 9, **characterized in that** the security element (2) is embedded at least partly in the document material.

11. The security document (1) according to claim 9, **characterized in that** the security element (2) is arranged on the surface of the security document (1).

12. The security document (1) according to claim 11, **characterized in that** the magnetic layer (27) of the security element (25) is arranged between the optically variable layer (32) of the security element (25) and the security document (1).

## Revendications

1. Élément de sécurité (25) pour un document sécurisé (1), tel qu'un billet de banque, une carte d'identité ou tout élément similaire, constitué d'une couche magnétique (27) et d'au moins une couche optiquement variable (32), la couche magnétique (27) étant recouverte par la couche optiquement variable (32), **caractérisé en ce que** la couche magnétique (27) est présente sous forme de zones magnétiques éloignées les unes des autres, qui forment un codage, la couche optiquement variable (32) étant une couche de vernis avec une structure en relief qui constitue une structure de diffraction et qui est combinée à une couche réfléchissante (30), et la couche réfléchissante (30) comporte des évidements (31) en forme de caractères, de dessins ou éléments similaires dans les zones intermédiaires sans couche magnétique et non pas dans les zones du codage magnétique.

2. Élément de sécurité (25) pour un document sécurisé (1), tel qu'un billet de banque, une carte d'identité ou tout élément similaire, constitué d'une couche magnétique (27) et d'au moins une couche optiquement variable (32), la couche magnétique (27) étant recouverte par la couche optiquement variable (32), **caractérisé en ce que** la couche magnétique (27) est présente sous forme de zones magnétiques éloignées les unes des autres, qui forment un codage, la couche optiquement variable (32) étant une structure de couche d'interférence et comportant des évidements (31) en forme de caractères, de dessins ou éléments similaires dans les zones intermédiaires sans couche magnétique et non pas dans les zones du codage magnétique.

3. Élément de sécurité (25) selon l'une quelconque des revendications 1 à 2, **caractérisé en ce qu'**une couche de vernis (28) supplémentaire, occupant toute la surface, est agencée entre la couche magnétique (27) et la couche optiquement variable (32).

4. Élément de sécurité (25) selon la revendication 3, **caractérisé en ce que** la couche de vernis (28) supplémentaire est teintée.

5. Élément de sécurité (25) selon la revendication 4, **caractérisé en ce que** la couche de vernis (28) supplémentaire est teintée en noir.

6. Élément de sécurité (25) selon l'une quelconque des revendications 3 à 5, **caractérisé en ce que** la couche de vernis supplémentaire contient des attributs d'authenticité supplémentaires.

7. Élément de sécurité (25) selon la revendication 6, **caractérisé en ce que** la couche de vernis supplémentaire contient des pigments fluorescents formant un attribut d'authenticité supplémentaire.

8. Élément de sécurité selon l'une quelconque des revendications 1 à 7, **caractérisé en ce que** la couche magnétique (27) est formée par une couche de vernis contenant des pigments magnétiques.

9. Document sécurisé (1), tel qu'un billet de banque, une carte d'identité ou tout élément similaire, **caractérisé en ce qu'**il est muni d'un élément de sécurité (2) selon au moins l'une quelconque des revendications 1 à 8.

10. Document sécurisé (1) selon la revendication 9, **caractérisé en ce que** l'élément de sécurité (2) est enrobé au moins en partie dans le matériau du document.

11. Document sécurisé (1) selon la revendication 9, **caractérisé en ce que** l'élément de sécurité (2) est agencé sur la surface du document sécurisé (1).

12. Document sécurisé (1) selon la revendication 11, **caractérisé en ce que** la couche magnétique (27) de l'élément de sécurité (25) est agencée entre la couche optiquement variable (32) de l'élément de sécurité (25) et le document sécurisé (1).
